# DEMANDE DE BREVET EUROPEEN

(11) **EP 1 112 915 A1**
(43) Date de publication de la demande: **04.07.2001**
(21) Numéro de dépôt: 00128311.8
(22) Date de dépôt: 22.12.2000
(51) Int. Cl.: B62D 25/08, B62D 29/00

(54) **Support de face avant renforcé pour véhicule automobile**

(30) Priorité: 29.12.1999 FR 9916665
(71) Demandeur: VALEO THERMIQUE MOTEUR, 78321 La Verrière (FR)
(72) Inventeur: Sigonneau, Jacques, 28163 Theuvy-Acheres (FR); Sandjivy, Valérie, 75014 Paris (FR)
(74) Mandataire: Lemaire, Marc

(57) **Abrégé**

Support de face avant (1) destiné à supporter divers composants à l'extrémité avant du véhicule, comprenant un corps (7) en matière plastique surmoulé sur un renfort améliorant la résistance mécanique du support.

Selon l'invention, le renfort est un tissu (6) de fibres, par exemple de verre ou de carbone, ou un câble composé avantageusement de fils d'acier.

Le renfort de l'invention est plus facile et plus économique à réaliser que les renforts en tôle emboutie utilisés habituellement.

## Description

L'invention concerne un support de face avant pour véhicule automobile.

Il est de pratique courante aujourd'hui, lors du montage d'un véhicule automobile, de mettre en place à l'avant de celui-ci divers composants tels que blocs d'éclairage, échangeurs de chaleur, avertisseurs sonores, serrure de capot, sous forme d'un sous-ensemble dans lequel ces composants sont fixés sur un support dit de face avant. Un tel sous-ensemble peut être réalisé par un équipementier, et le constructeur automobile n'a plus qu'à le présenter à l'avant du véhicule et à fixer le support de face avant sur les éléments de structure du véhicule réalisant ainsi la fixation indirecte des composants portés par le support de face avant, sans avoir besoin de manipuler ni de fixer individuellement ces composants sur la structure du véhicule. Ceci constitue une simplification considérable des opérations de montage du véhicule.

EP 0 658 470 A décrit un tel support de face avant comprenant un corps en matière plastique surmoulé sur un renfort métallique en tôle emboutie.

Un renfort est nécessaire pour conférer au support de face avant la résistance mécanique requise permettant une fixation stable des composants qu'il porte. Cependant, sa réalisation implique des opérations coûteuses d'emboutissage et de protection contre la corrosion.

Le but de l'invention est de s'affranchir de ces opérations, et ainsi de simplifier et rendre plus économique la réalisation du support de face avant.

L'invention vise notamment un support de face avant propre à supporter une multiplicité de composants d'un véhicule automobile et à être fixé à l'extrémité avant du véhicule, comprenant un corps en matière plastique surmoulé sur un renfort améliorant la résistance mécanique du support.

Selon l'invention, le renfort comprend une multiplicité d'éléments allongés sous forme de fibres ou de fils mutuellement associés.

Des caractéristiques optionnelles de l'invention, complémentaires ou alternatives, sont énoncées ci-après:
- Lesdits éléments allongés sont associés pour former au moins une nappe de tissu.
- Lesdits éléments allongés sont des fibres minérales.
- Lesdites fibres minérales sont en un matériau choisi parmi le carbone et le verre.
- Lesdits éléments allongés sont associés pour former au moins un câble.
- Lesdits éléments allongés sont des fils d'acier.

Les caractéristiques et avantages de l'invention seront exposés plus en détail dans la description ci-après, en se référant aux dessins annexés.

La figure 1 est une vue de face d'un support de face avant selon l'invention.

La figure 2 est une vue partielle de ce support, en coupe selon la ligne II-II de la figure 1.

La figure 3 est une vue analogue à la figure 2 relative à un autre support de face avant selon l'invention.

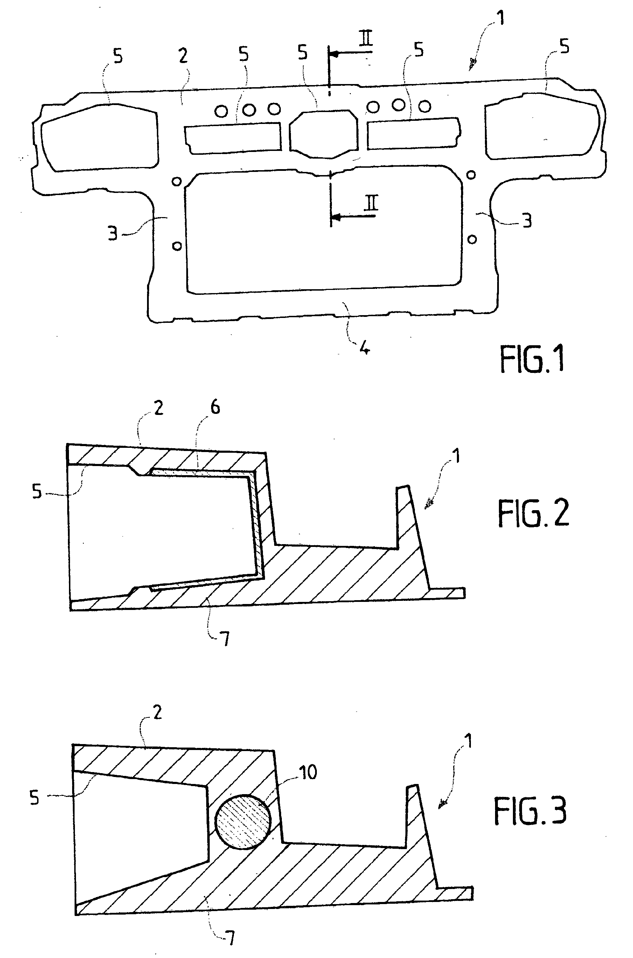

La figure 1 montre un support de face avant 1 de forme générale classique composé d'une traverse supérieure 2, de deux montants 3 s'étendant vers le bas à partir de la traverse supérieure, et d'une traverse inférieure 4 reliant les extrémités inférieures des montants 3. La traverse supérieure présente des évidements et/ou des ouvertures 5 destinés à loger des composants qui doivent être montés sur le véhicule par l'intermédiaire du support 1.

Le plan de coupe vertical de la figure 2, qui coïncide après montage avec le plan longitudinal médian du véhicule, traverse l'un des évidements 5. Un renfort 6 sous forme d'un tissu de fibres, par exemple de verre ou de carbone, est noyé dans la matière plastique constitutive d'un corps 7, ce corps et le renfort 6 formant ensemble le support 1. Dans l'exemple illustré, le renfort 6 est adjacent à la paroi de l'évidement 5. Ceci peut être obtenu en appliquant le tissu sur une partie saillante du moule, destinée à former l'évidement, avant fermeture du moule et injection de la matière plastique. Aucune opération préalable de mise en forme du tissu n'est nécessaire. Bien entendu, il est également possible de positionner le renfort, par tous moyens connus, de manière qu'il se situe au sein de la matière plastique, éloigné de toute paroi du corps 7. Le renfort en tissu peut s'étendre sur tout ou partie de la longueur de la traverse 2. Il peut être réalisé sous forme d'une nappe continue ou de plusieurs nappes décalées les unes par rapport aux autres dans la direction longitudinale de la traverse (direction latérale du véhicule) et/ou de haut en bas et/ou de l'avant vers l'arrière du véhicule. Les nappes peuvent être en contact mutuel ou écartées les unes des autres.

Sur la figure 3, où les mêmes numéros de références que sur la figure 2 sont utilisés pour désigner des éléments identiques ou analogues, le renfort en tissu est remplacé par un renfort 10 sous forme d'un câble noyé dans l'épaisseur du corps 7. Il peut s'agir en particulier d'un câble en fils d'acier tel que ceux utilisés dans divers domaines techniques notamment pour la transmission d'efforts de traction. De même que le tissu 6, le câble 10 peut s'étendre sur tout ou partie de la longueur de la traverse 2. Il peut être mis en place dans le moule sous tension où à l'état lâche.

Bien entendu, il est possible selon l'invention de combiner entre eux un renfort sous forme de tissu et un renfort sous forme de câble, ainsi que de combiner l'un et/ou l'autre avec tous autres types de renforts.

Le renfort de l'invention peut également être prévu dans d'autres parties du support de face avant que la traverse supérieure.

## Revendications

1. Support de face avant (1) propre à supporter une multiplicité de composants d'un Véhicule automobile et à être fixé à l'extrémité avant du véhicule, comprenant un corps (7) en matière plastique surmoulé sur un renfort (6) améliorant la résistance mécanique du support, caractérisé en ce que le renfort comprend une multiplicité d'éléments allongés sous forme de fibres ou de fils mutuellement associés.

2. Support de face avant selon la revendication 1, dans lequel lesdits éléments allongés sont associés pour former au moins une nappe de tissu (6).

3. Support de face avant selon la revendication 2, dans lequel lesdits éléments allongés sont des fibres minérales.

4. Support de face avant selon la revendication 3, dans lequel lesdites fibres minérales sont en un matériau choisi parmi le carbone et le verre.

5. Support de face avant selon l'une des revendications précédentes, dans lequel lesdits éléments allongés sont associés pour former au moins un câble (10).

6. Support de face avant selon la revendication 5, dans lequel lesdits éléments allongés sont des fils d'acier.
